# EUROPÄISCHE PATENTANMELDUNG

(11) **EP 4 321 779 A1**
(43) Veröffentlichungstag der Anmeldung: **14.02.2024**
(21) Anmeldenummer: 23183539.8
(22) Anmeldetag: 05.07.2023
(51) Int. Cl.: F16K 1/22, F16K 1/226, F16K 27/02, H01M 8/00

(54) **STELLKLAPPENBAUGRUPPE, INSBESONDERE FÜR EINEN GASSTROM IN EINEM BRENNSTOFFZELLENSYSTEM**

(30) Priorität: 11.08.2022 DE 102022120289
(71) Anmelder: Purem GmbH, 66539 Neunkirchen (DE)
(72) Erfinder: Lory, Markus, Stuttgart (DE); Grün, Matthias, Altbach (DE); Wacker, Andreas, Plochingen (DE); Hammer, Jochen, Stuttgart (DE)
(74) Vertreter: Ruttensperger Lachnit Trossin Gomoll

(57) **Zusammenfassung**

Eine Stellklappenbaugruppe, insbesondere für einen Gasstrom in einem Brennstoffzellensystem, insbesondere in einem Fahrzeug, umfasst ein einen Gasströmungskanal bereitstellendes Stellklappengehäuse (14), eine in dem Stellklappengehäuse (14) zwischen einer eine Gasströmung durch den Gasströmungskanal im Wesentlichen unterbindenden Schließstellung und wenigstens einer den Gasströmungskanal zur Durchströmung freigebenden Offenstellung verstellbaren Stellklappe mit einem an einer um eine Schwenkwellenachse (A) drehbaren Schwenkwelle (18) getragenen, scheibenartigen Stellklappenkörper, wobei die Schwenkwelle (18) einen mit einem Schwenkwellenantrieb zu koppelnden, in einem ersten Lagerbereich (28) an dem Stellklappengehäuse (14) um die Schwenkwellenachse (A) drehbaren getragenen ersten Schwenkwellen-Endabschnitt (48) und einen in einem zweiten Lagerbereich an dem Stellklappengehäuse (14) um die Schwenkwellenachse (A) drehbar getragenen zweiten Schwenkwellen-Endabschnitt aufweist, wobei wenigstens ein Lagerbereich von erstem Lagerbereich (28) und zweitem Lagerbereich eine die Schwenkwelle (18) drehbar stützende Lagereinheit (62) und wenigstens ein durch die Lagereinheit (62) axial beaufschlagtes und an einer Außenumfangsfläche der Schwenkwelle (18) anliegendes Dichtelement (70) umfasst.

## Beschreibung

Die vorliegende Erfindung betrifft eine Stellklappenbaugruppe, die beispielsweise für einen Gasstrom in einem Brennstoffzellensystem, insbesondere in einem Fahrzeug eingesetzt werden kann, um elektrische Energie bereitzustellen.

In derartigen Brennstoffzellensystemen ist es erforderlich, abhängig vom Betriebszustand, verschiedene Gasströme durch den Anodenbereich bzw. den Kathodenbereich einer Brennstoffzelle bzw. eines Brennstoffzellenstapels hindurch zu leiten bzw. daran vorbei zu leiten. Dabei besteht eine hohe Anforderung an die Dichtigkeit von zur Regulierung derartiger Gasströme eingesetzten Stellklappenbaugruppen, um zu gewährleisten, dass insbesondere in Betriebszuständen, in welchen ein bestimmter Gasstrom nicht durch eine Brennstoffzelle oder nicht an einer Brennstoffzelle vorbei geleitet werden soll, Leckageströme ausgeschlossen werden können bzw. im Wesentlichen kein Gas zur Umgebung entweichen kann.

Es ist die Aufgabe der vorliegenden Erfindung, eine Stellklappenbaugruppe, insbesondere für einen Gasstrom in einem Brennstoffzellensystem, insbesondere in einem Fahrzeug, bereitzustellen, welche bei konstruktiv einfacher Ausgestaltung Gasleckagen im Wesentlichen verhindern kann.

Erfindungsgemäß wird diese Aufgabe gelöst durch eine Stellklappenbaugruppe, insbesondere für einen Gasstrom in einem Brennstoffzellensystem, insbesondere in einem Fahrzeug, umfassend ein einen Gasströmungskanal bereitstellendes Stellklappengehäuse, eine in dem Stellklappengehäuse zwischen einer eine Gasströmung durch den Gasströmungskanal im Wesentlichen unterbindenden Schließstellung und wenigstens einer den Gasströmungskanal zur Durchströmung freigebenden Offenstellung verstellbaren Stellklappe mit einem an einer um eine Schwenkwellenachse drehbaren Schwenkwelle getragenen, scheibenartigen Stellklappenkörper, wobei die Schwenkwelle einen mit einem Schwenkwellenantrieb zu koppelnden, in einem ersten Lagerbereich an dem Stellklappengehäuse um die Schwenkwellenachse drehbaren getragenen ersten Schwenkwellen-Endabschnitt und einen in einem zweiten Lagerbereich an dem Stellklappengehäuse um die Schwenkwellenachse drehbar getragenen zweiten Schwenkwellen-Endabschnitt aufweist, wobei wenigstens ein Lagerbereich von erstem Lagerbereich und zweitem Lagerbereich eine die Schwenkwelle drehbar stützende Lagereinheit und wenigstens ein durch die Lagereinheit axial beaufschlagtes und an einer Außenumfangsfläche der Schwenkwelle anliegendes Dichtelement umfasst.

Durch das Bereitstellen des an der Außenumfangsfläche der Schwenkwelle anliegenden wenigstens einen Dichtelements ist gewährleistet, dass auch bei Auftreten eines Lagerspiels im Bereich der wenigstens einen Lagereinheit ein gegen den Austritt von Gas dichter Abschluss der Stellschraubenbaugruppe erreicht wird.

Da im ersten Schwenkwellen-Endabschnitt die Schwenkwelle durch den zugeordneten ersten Lagerbereich hindurchgeführt werden muss, um eine Kopplung mit dem Schwenkwellenantrieb erreichen zu können, ist es für einen gasdichten Abschluss besonders vorteilhaft, wenn der wenigstens eine Lagerbereich der erste Lagerbereich ist. Im zweiten Lagerbereich, in welchem die Schwenkwelle mit ihrem zweiten Schwenkwellenachse nicht durch den Lagerbereich hindurch bzw. aus diesen heraus geführt sein muss, kann ein gasdichter Abschluss durch andere Maßnahmen, beispielsweise das vollständige Umkapseln des zweiten Schwenkwellen Endabschnitts mit einer Lagerbuchse, bereitgestellt werden.

Für einen über den gesamten Umfang der Schwenkwelle vollständig gasdichten Anschluss des wenigstens einen Dichtelements an die Schwenkwelle wird vorgeschlagen, dass das wenigstens eine Dichtelement die Schwenkwellenachse ringartig umgibt, oder/und dass die Lagereinheit die Schwenkwellenachse ringartig umgibt.

Um eine stabile Positionierung des Dichtelements in dem Aufbaumaterial der Lagereinheit einerseits und eine zu einer ausreichenden Abdichtung führende Wechselwirkung mit der Schwenkwelle andererseits gewährleisten zu können, kann das wenigstens eine Dichtelement einen von der Lagereinheit axial beaufschlagten Halteabschnitt und einen an der Schwenkwelle anliegenden Dichtabschnitt umfassen.

Dabei kann zum Erhalt eines axial kompakten Aufbaus der Halteabschnitt sich im Wesentlichen radial erstrecken, und der Dichtabschnitt kann sich vom Halteabschnitt nach radial innen auf die Schwenkwelle zu erstrecken. Das wenigstens eine Dichtelement hat dabei also eine im Wesentlichen ringscheibenartige Gestalt.

Zum definierten axialen Einspannen des wenigstens einen Dichtelements kann die Lagereinheit wenigstens einen Lagerring umfassen, und der Halteabschnitt des wenigstens einen Dichtelements kann zwischen dem wenigstens einen Lagerring und einem Boden einer Lagerbuchse des wenigstens einen Lagerbereichs oder/und dem Stellklappengehäuse gehalten sein.

Um eine flächige Abstützung für das wenigstens eine Dichtelement bereitstellen zu können, wird vorgeschlagen, dass in seinem das wenigstens eine Dichtelement abstützenden Bereich der Boden der Lagerbuchse oder/und das Stellklappengehäuse zur Schwenkwellenachse im Wesentlichen orthogonal orientiert und im Wesentlichen planar ausgebildet ist.

Um die durch den wenigstens einen Lagerring generierte Beaufschlagungswirkung zuverlässig beibehalten zu können, wird vorgeschlagen, der wenigstens eine Lagerring in der Lagerbuchse durch Presspassung gehalten ist.

Für einen wartungsarmen Aufbau kann die Lagereinheit eine Gleitlagereinheit sein.

Das wenigstens eine Dichtelement kann zum Erreichen der erforderlichen Dichtfunktion mit Elastomermaterial aufgebaut sein.

Die vorliegende Erfindung betrifft ferner ein Verfahren zur Herstellung einer erfindungsgemäß aufgebauten Stellklappenbaugruppe, umfassend die Maßnahmen:
a) Anordnen des wenigstens einen Dichtelements in einer Lagerbuchse des wenigstens einen Lagerbereichs,
b) Einpressen wenigstens eines Lagerrings der Lagereinheit in die Lagerbuchse derart, dass der wenigstens eine Lagerring das wenigstens eine Dichtelement axial beaufschlagt und das wenigstens eine Dichtelement durch die axiale Beaufschlagung nach radial innen verformt wird.

Durch das Einpressen des wenigstens einen Lagerrings wird eine derartige axiale Beaufschlagung des wenigstens einen Dichtelements hervorgerufen, dass dieses nach radial innen ausweicht und durch radiale Anlage des wenigstens einen Dichtelements an der Schwenkwelle eine zuverlässige Dichtwirkung erzielt wird.

Dabei können die Maßnahmen a) und b) durchgeführt werden, nachdem die Schwenkwelle mit einem ihrer Schwenkwellen-Endabschnitte in die Lagerbuchse des wenigstens einen Lagerbereichs eingreifend positioniert worden ist. Bei dieser Vorgehensweise wird das wenigstens eine Dichtelement und danach der wenigstens eine Lagerring den Schwenkwellen-Endabschnitt umgreifend in der Lagerbuchse positioniert. Dabei wird der wenigstens eine Lagerring derart auf das den Schwenkwellen-Endabschnitt umgreifende Dichtelement zu belastet, dass dieser das wenigstens eine Dichtelement axial beaufschlagt und dadurch das Dichtelement nach radial innen in Richtung auf die dieses bereits durchsetzende Schwenkwelle zu verformt wird bzw. ausweicht.

Bei einer alternativen Vorgehensweise können die Maßnahmen a) und b) durchgeführt werden, bevor die Schwenkwelle mit einem ihrer Schwenkwellen-Endabschnitte in die Lagerbuchse des wenigstens einen Lagerbereichs eingreifend positioniert wird. Beispielsweise können das wenigstens eine Dichtelement und der wenigstens eine Lagerring in der Lagerbuchse positioniert werden, bevor diese an dem die Stellklappe und damit auch die Schwenkwelle bereits enthaltenden Stellklappengehäuse angeordnet und daran festgelegt wird.

Die Erfindung betrifft ferner ein Brennstoffzellensystem, insbesondere für ein Fahrzeug, umfassend wenigstens eine erfindungsgemäße Stellklappenbaugruppe, welche vorzugsweise mit einem erfindungsgemäßen Verfahren hergestellt ist.

Die Erfindung wird nachfolgend mit Bezug auf die beiliegenden Figuren detailliert beschrieben. Es zeigt:
- Fig. 1: eine Prinzipskizze eines Brennstoffzellensystems eines Fahrzeugs;
- Fig. 2: eine Stellklappenbaugruppe für ein Brennstoffzellensystem;
- Fig. 3: Schnittansicht eines Lagerbereichs für eine Schwenkwelle der Stellklappenbaugruppe.

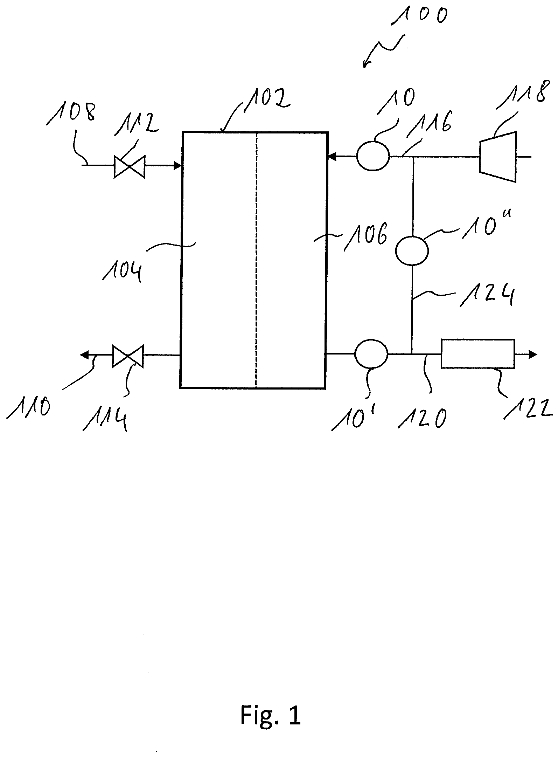

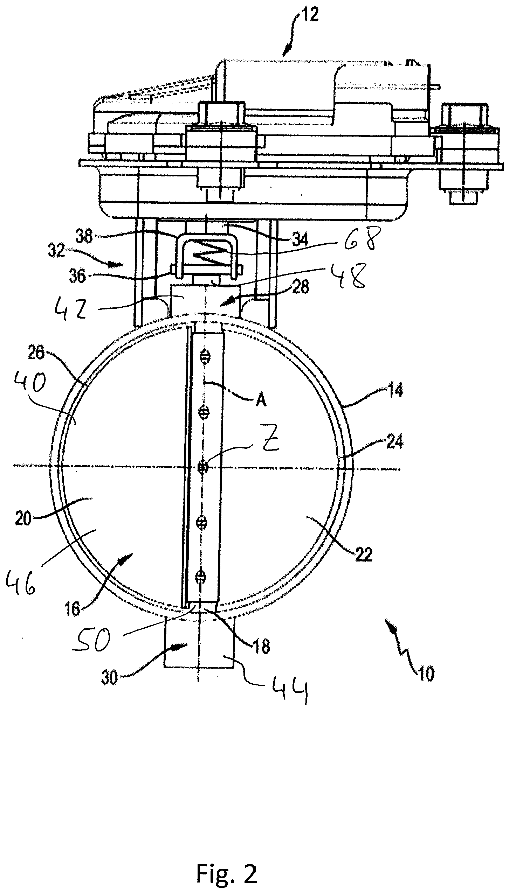

Bevor nachfolgend die erfindungsgemäße Ausgestaltung einer Stellklappenbaugruppe für ein Brennstoffzellensystem insbesondere hinsichtlich einer zum Bereitstellen eines dichten Abschlusses vorgesehenen Struktur derselben detailliert beschrieben wird, wird mit Bezug auf die Fig. 1 der grundsätzliche Aufbau eines Brennstoffzellensystems beschrieben, mit welchem in einem Fahrzeug elektrische Energie bereitgestellt werden kann, und wird mit Bezug auf die Fig. 2 der grundsätzliche Aufbau einer Stellklappenbaugruppe erläutert, mit welcher insbesondere im Zuordnung zum Kathodenbereich eines derartigen Brennstoffzellensystems der Gasstrom reguliert bzw. der Kathodenbereich gegen Durchströmung abgeschlossen werden kann.

Das in Figur 1 dargestellte Brennstoffzellensystem 100 umfasst als wesentlichen Systembereich eine allgemein mit 102 bezeichnete Brennstoffzelle mit einem mit Wasserstoff bzw. einem Wasserstoff enthaltenden Gas zu speisenden Anodenbereich 104 und einem mit Sauerstoff bzw. einem Sauerstoff enthaltenden Gas, zum Beispiel Luft, zu speisenden Kathodenbereich 106.

Dem Anodenbereich 104 sind eine Zuführleitung 108 und eine Abführleitung 110 mit jeweiligen Ventilen 112, 114 zugeordnet, um den Wasserstoff bzw. das Wasserstoff enthaltende Gas in den Anodenbereich 104 einleiten zu können bzw. Anodenabgas aus diesem ableiten zu können und erforderlichenfalls den Anodenbereich 104 vollständig abschließen zu können.

Dem Kathodenbereich 106 ist eine Zuführleitung 116 zugeordnet, über welche beispielsweise vermittels eines Kompressors 118 oder dergleichen das Sauerstoff enthaltende Gas, also beispielsweise Luft, in diesen eingeleitet werden kann. In der Zuführleitung 116 ist eine allgemein mit 10 bezeichnete Stellenklappenbaugruppe vorgesehen, mit welcher der Gasstrom über die Zuführleitung 116 reguliert bzw. der Kathodenbereich 106 in seinem Einleitbereich im Wesentlichen gasdicht abgeschlossen werden kann.

Zum Ableiten von Kathodenabgas ist dem Kathodenbereich 106 eine Abführleitung 120 zugeordnet. Diese führt zu einer Brennstoffzellen-Abgasanlage 122, in welcher beispielsweise vermittels eines Wasserabscheiders im Kathodenabgas enthaltenes Wasser abgeschieden werden kann. Ferner ist in der Abführleitung 120 eine weitere Stellklappenbaugruppe 10' angeordnet, vermittels welcher die Abführleitung 120 und somit ein Ableitbereich des Kathodenbereichs 106 im Wesentlichen gasdicht abgeschlossen werden können.

Zwischen der Zuführleitung 116 und der Abführleitung 120 des Kathodenbereichs 106 verläuft eine Bypassleitung 124. Auch in der Bypassleitung 124 ist eine Stellklappenbaugruppe 10" angeordnet, mit welcher der Gasstrom über die Bypassleitung 124 reguliert werden kann bzw. die Bypassleitung 124 im Wesentlichen gasdicht abgeschlossen werden kann.

Es ist darauf hinzuweisen, dass der in Figur 1 dargestellte und vorangehend beschriebene Aufbau des Brennstoffzellensystems 100 nur ein Beispiel einer Vielzahl verschiedener Möglichkeiten der Zufuhr und Abfuhr von Gas insbesondere am Kathodenbereich 106 veranschaulicht. Maßgeblich ist, dass in Zuordnung zu dem Kartonbereich 106 zumindest eine, gegebenenfalls mehrere Stellklappenbaugruppen 10, 10`, 10" vorgesehen sind, wobei dann, wenn mehrere derartige Stellklappenbaugruppen 10, 10`, 10" vorgesehen sind, diese zu einander grundsätzlich baugleich sein können oder abhängig davon, in welchem Bereich sie positioniert sind und welches Ausmaß an Gasdichtigkeit durch diese bereitzustellen ist, auch unterschiedlich gestaltet sein können.

Die in Fig. 2 dargestellte und beispielsweise in dem Brennstoffzellensystem 100 der Fig. 1 eingesetzte Stellklappenbaugruppe 10 umfasst einen beispielsweise elektromotorischen Stellklappenantrieb 12 und in einem rohrartig ausgebildeten und einen Gasströmungskanal 46 umgrenzenden Stellklappengehäuse 14 eine allgemein mit 16 bezeichnete Stellklappe.

Die Stellklappe 16 umfasst einen an einer Schwenkwelle 18 um eine Schwenkwellenachse A schwenkbar getragenen, scheibenartigen Stellklappenkörper 24 mit zwei jeweils einen Klappenflügel bereitstellenden Stellklappenkörperteilen 20, 22. In Zuordnung zu der Stellklappe 16 ist am Stellklappengehäuse 14 ein Stellklappensitz 26 vorgesehen, an welchem die Stellklappe 16 in einer Schließstellung derselben mit einem bezüglich eines Zentralbereichs Z der Stellklappe 16 radial außen liegenden Abschlussbereich 40 anliegt.

Zum Bewegen der Stellklappe 16 zwischen der Schließstellung und einer vollkommen geöffneten Stellung, in welcher der scheibenartige Stellklappenkörper 24 zur Zeichenebene der Fig. 1 im Wesentlichen orthogonal orientiert ist und somit den Gasströmungskanal 46 im Stellklappengehäuse 14 zur Durchströmung im Wesentlichen vollständig freigibt, ist eine Antriebswelle 34 des Stellklappenantriebs 12 vermittels einer Kopplungsanordnung 32 mit der in Lagerbereichen 28, 30 am Stellklappengehäuse 14 um die Schwenkwellenachse A schwenkbar getragenen Schwenkwelle 18 zur gemeinsamen Drehung gekoppelt. Dabei umfasst die Kopplungsanordnung 32 beispielsweise ein mit der Antriebswelle 34 drehfest verbundenes Kopplungsteil 38 und ein mit der Schwenkwelle 18 drehfest verbundenes Kopplungsteil 36, welches mit dem Kopplungsteil 38 in Drehkopplungseingriff steht.

Jeder der beiden Lagerbereiche 28, 30 umfasst eine am Stellklappengehäuse 14 getragene, beispielsweise an einer Außenumfangsfläche desselben durch Verschweißung festgelegte, Lagerbuchse 42, 44, in welcher ein jeweiliger axialer Endabschnitt der Schwenkwelle 18 um die Schwenkwellenachse A drehbar aufgenommen ist.

Von den beiden Lagerbereichen 28, 30 bildet der Lagerbereich 28 einen ersten Lagerbereich, in welchem ein erster Schwenkwellen-Endabschnitt 48 der Schwenkwelle 18 drehbar gelagert ist. Der erste Schwenkwellen-Endabschnitt 48 steht axial über den ersten Lagerbereich 28 hervor, um vermittels der Kopplungsanordnung 32 mit der Antriebswelle 34 gekoppelt zu werden. Der Lagerbereich 30 bildet einen zweiten Lagerbereich, in welchem ein zweiter Schwenkwellen-Endabschnitt 50 der Schwenkwelle 18 um die Schwenkwellenachse A drehbar gelagert ist.

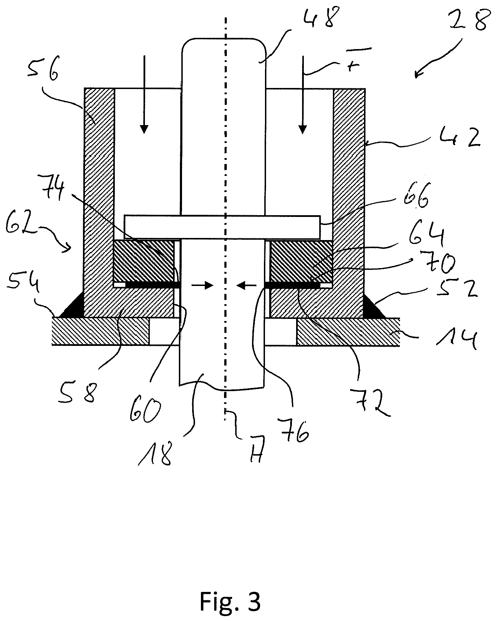

In Fig. 3 ist der erste Lagerbereich 28 detailliert dargestellt. Der erste Lagerbereich 28 umfasst die beispielsweise durch eine vollständig umlaufende Schweißnaht 52 gasdicht an der Außenumfangsfläche 54 des Stellklappengehäuses 14 festgelegte Lagerbuchse 42. Die Lagerbuchse 42 umfasst eine Umfangswand 56 und eine einen an diese anschließenden Boden 58 mit einer von der Schwenkwelle 18 durchsetzten Öffnung 60. Es ist darauf hinzuweisen, dass die Lagerbuchse 42 auch lediglich die Umfangswand 56 und keine Bodenwand aufweisen kann, was insbesondere bei der gewölbten Kontur der Außenumfangsfläche 54 des Stellklappengehäuses 14 eine einfachere Festlegung der Lagerbuchse 42 am Stellklappengehäuse 14 bzw. auch eine einfacher herzustellende Ausgestaltung der Lagerbuchse 42 ermöglicht.

In der Lagerbuchse 42 ist eine allgemein mit 62 bezeichnete Lagereinheit aufgenommen. Die Lagereinheit 62 umfasst im dargestellten Ausgestaltungsbeispiel einen den ersten Schwenkwellenendabschnitt 48 aufnehmenden und radial stützenden Lagerring 64 und ist somit als Gleitlagereinheit ausgebildet. Der Lagerring 64 ist in der Lagerbuchse 42 durch Presspassung aufgenommen und somit in definierter axialer Positionierung an der Umfangswand 56 der Lagerbuchse 42 gehalten. Die Schwenkwelle 18 kann mit einem am ersten Schwenkwellen-Endabschnitt 48 der vorgesehenen, flanschartigen Schwenkwellenkopf 66 axial am Lagerring 64 abgestützt sein. Eine die Schwenkwelle 18 mit ihrem Schwenkwellenkopf 66 in Anlage an dem Lagerring 64 haltende Vorspannkraft kann durch eine zwischen der Schwenkwelle 18 bzw. dem Kopplungsteil 36 einerseits und der Antriebswelle 34 bzw. dem Kopplungsteil 38 andererseits wirkende Vorspannfeder 68 bereitgestellt sein, so dass mit der definierten Positionierung des Lagerrings 64 in der Lagerbuchse 42 auch eine definierte Positionierung der Schwenkwelle 18 und somit der gesamten Stellklappe 16 im Stellklappengehäuse 14 vorgegeben ist.

Zum Bereitstellen eines gasdichten Abschlusses im ersten Lagerbereich 28 ist ferner ein allgemein mit 70 bezeichnetes, ringscheibenartiges, mit Elastomermaterial aufgebautes Dichtelement vorgesehen. Das Dichtelement 70 ist mit einem Halteabschnitt 72 zwischen dem Lagerring 64 und dem Boden 58 der Lagerbuchse 42 gehalten bzw. axial eingespannt. Mit einem Dichtabschnitt 74 liegt das Dichtelement 70 nach radial innen an einer Außenumfangsfläche der Schwenkwelle 18 unter radialer Vorspannung an. Im Dichtabschnitt 74 ist eine Öffnung 76 ausgebildet, welche von der Schwenkwelle 18 durchsetzt ist. Es ist darauf hinzuweisen, dass in Fig. 3 ein zwischen dem Lagerring 64 und der Schwenkwelle 18 gebildetes Lagerspiel zum besseren darstellen des Aufbaus des Dichtelements 70 übertrieben dargestellt ist.

Durch die axiale Beaufschlagung des Dichtelements 70 vermittels des Lagerrings 64 und die axiale Einspannung des Halteabschnitts 72 zwischen dem Lagerring 64 und dem Boden 58 wird das grundsätzlich verformbare, im Wesentlichen jedoch nicht kompressible Dichtelement 70 nach radial innen beaufschlagt, so dass der Halteabschnitt 74 verstärkt gegen eine Außenumfangsfläche der Schwenkwelle 18 gepresst wird. Um dabei einen flächigen Anlagekontakt zwischen dem Dichtelement 70 und dem Boden 58 zu erreichen, ist der Boden 58 in seinem das Dichtelement 70 axial stützenden Bereich im Wesentlichen planar und zur Schwenkwellenachse A orthogonal orientiert ausgebildet. Entsprechend ist auch der Lagerring 64 an seiner das Dichtelement 70 gegen den Boden 58 pressenden Stirnseite im Wesentlichen planar und zur Schwenkwellenachse A orthogonal orientiert ausgebildet.

Es ist darauf hinzuweisen, dass entsprechend der im Wesentlichen planaren Ausgestaltung des Bodens 58 auch das Stellklappengehäuse 14 in seinem die Lagerbuchse 42 tragenden Bereich im Wesentlichen planar und zur Schwenkwellenachse A orthogonal orientiert ausgebildet sein kann. Dies gilt insbesondere auch dann, wenn die Lagerbuchse 42 keinen Boden aufweist und somit das Dichtelement 70 durch den Lagerring 64 gegen die Außenumfangsfläche 54 des Stellklappengehäuses 14 gepresst wird.

Um den Zustand, in welchem durch axiale Beaufschlagung das Dichtelement 70 radial gegen die Schwenkwelle 18 gepresst wird, zuverlässig aufrecht erhalten zu können, ist, wie bereits ausgeführt, der Lagerring 64 durch Presspassung in der Lagerbuchse 42 aufgenommen. Diese Presspassung bzw. die dabei zwischen dem Lagerring 64 und der Umfangswand 56 der Lagerbuchse 42 generierte Reibkraft ist derart groß, dass dann, wenn eine zum Einpressen des Lagerrings 64 aufgebrachte Kraft F nach dem Einpressen des Lagerrings 64 aufgehoben wird, der Lagerring 64 zuverlässig in seiner das Dichtelement 70 axial beaufschlagenden und dadurch nach radial innen verformenden Position in der Lagerbuchse 42 verbleibt.

Beim Aufbau der in den Fig. 2 und 3 dargestellten Stellklappenbaugruppe 10 kann der Lagerring 64 und mit diesem das Dichtelement 70 in der Lagerbuchse 42 positioniert werden, bevor die Schwenkwelle am Stellklappengehäuse 14 angeordnet wird. Alternativ kann bei bereits am Stellklappengehäuse 14 angebrachter Lagerbuchse 42 zunächst die Schwenkwelle 18 im Stellklappengehäuse 14 und somit mit dem Schwenkwellen-Endabschnitt 48 in der Lagerbuchse 42 positioniert werden, bevor der Lagerring 64 und das Dichtelement 70 in der Lagerbuchse 42 positioniert werden. Um bei der Montage eine Beeinträchtigung durch den Schwenkwellenkopf 66 zu vermeiden, ist es möglich, diesen erst nach dem Positionieren der Schwenkwelle 18 in den beiden Lagerbereichen 28, 30 an der Schwenkwelle 18 anzuordnen und beispielsweise durch Verschweißung daran festzulegen.

Es ist darauf hinzuweisen, dass grundsätzlich auch im zweiten Lagebereich 30 eine derartige Struktur vorgesehen sein könnte. Da im zweiten Lagebereich 30 die Schwenkwelle 18 jedoch nicht aus diesem herauszuführen ist, kann ein gasdichter Abschluss beispielsweise auch dadurch erreicht werden, dass die Lagerbuchse 44 des zweiten Lagerbereichs 30 den zweiten Schwenkwellen-Endabschnitt vollständig, also auch axial umkapselt, beispielsweise indem an einer Umfangswand der Lagerbuchse 44 ein die Lagerbuchse 44 axial abschließender Deckel vorgesehen ist.

Abschließend ist zu betonen, dass eine erfindungsgemäß aufgebaute Stellklappenbaugruppe auch in anderen Anwendungen, insbesondere auch bei stationären Brennstoffzellensystemen, Anwendung finden kann.

## Patentansprüche

1. Stellklappenbaugruppe, insbesondere für einen Gasstrom in einem Brennstoffzellensystem (100), insbesondere in einem Fahrzeug, umfassend ein einen Gasströmungskanal (46) bereitstellendes Stellklappengehäuse (14), eine in dem Stellklappengehäuse (14) zwischen einer eine Gasströmung durch den Gasströmungskanal (46) im Wesentlichen unterbindenden Schließstellung und wenigstens einer den Gasströmungskanal (46) zur Durchströmung freigebenden Offenstellung verstellbaren Stellklappe (16) mit einem an einer um eine Schwenkwellenachse (A) drehbaren Schwenkwelle (18) getragenen, scheibenartigen Stellklappenkörper (24), wobei die Schwenkwelle (18) einen mit einem Schwenkwellenantrieb (12) zu koppelnden, in einem ersten Lagerbereich (28) an dem Stellklappengehäuse (14) um die Schwenkwellenachse (A) drehbaren getragenen ersten Schwenkwellen-Endabschnitt (48) und einen in einem zweiten Lagerbereich (30) an dem Stellklappengehäuse (14) um die Schwenkwellenachse (A) drehbar getragenen zweiten Schwenkwellen-Endabschnitt (50) aufweist, wobei wenigstens ein Lagerbereich von erstem Lagerbereich (28) und zweitem Lagerbereich (30) eine die Schwenkwelle (18) drehbar stützende Lagereinheit (62) und wenigstens ein durch die Lagereinheit (62) axial beaufschlagtes und an einer Außenumfangsfläche der Schwenkwelle (18) anliegendes Dichtelement (70) umfasst.

2. Stellklappenbaugruppe nach Anspruch 1, **dadurch gekennzeichnet, dass** der wenigstens eine Lagerbereich der erste Lagerbereich (28) ist.

3. Stellklappenbaugruppe nach Anspruch 1 oder 2, **dadurch gekennzeichnet, dass** das wenigstens eine Dichtelement (70) die Schwenkwellenachse (A) ringartig umgibt, oder/und dass die Lagereinheit (62) die Schwenkwellenachse (A) ringartig umgibt.

4. Stellklappenbaugruppe nach einem der Ansprüche 1-3, **dadurch gekennzeichnet, dass** das wenigstens eine Dichtelement (70) einen von der Lagereinheit (62) axial beaufschlagten Halteabschnitt (72) und einen an der Schwenkwelle (18) anliegenden Dichtabschnitt (74) umfasst.

5. Stellklappenbaugruppe nach Anspruch 4, **dadurch gekennzeichnet, dass** der Halteabschnitt (72) sich im Wesentlichen radial erstreckt, und dass der Dichtabschnitt (74) sich vom Halteabschnitt (74) nach radial innen auf die Schwenkwelle (18) zu erstreckt.

6. Stellklappenbaugruppe nach Anspruch 4 oder 5, **dadurch gekennzeichnet, dass** die Lagereinheit (62) wenigstens einen Lagerring (64) umfasst, und dass der Halteabschnitt (72) des wenigstens einen Dichtelements (70) zwischen dem wenigstens einen Lagerring (64) und einem Boden (58) einer Lagerbuchse (42) des wenigstens einen Lagerbereichs oder/und dem Stellklappengehäuse (14) gehalten ist.

7. Stellklappenbaugruppe nach Anspruch 6, **dadurch gekennzeichnet, dass** in seinem das wenigstens eine Dichtelement (70) abstützenden Bereich der Boden (58) der Lagerbuchse (42) oder/und das Stellklappengehäuse (14) zur Schwenkwellenachse (A) im Wesentlichen orthogonal orientiert und im Wesentlichen planar ausgebildet ist.

8. Stellklappenbaugruppe nach einem der Ansprüche 1-7, **dadurch gekennzeichnet, dass** der wenigstens eine Lagerring (64) in der Lagerbuchse (42) durch Presspassung gehalten ist.

9. Stellklappenbaugruppe nach einem der Ansprüche 1-8, **dadurch gekennzeichnet, dass** die Lagereinheit (62) eine Gleitlagereinheit ist.

10. Stellklappenbaugruppe nach einem der Ansprüche 1-9, **dadurch gekennzeichnet, dass** das wenigstens eine Dichtelement (70) mit Elastomermaterial aufgebaut ist.

11. Verfahren zur Herstellung einer Stellklappenbaugruppe einem der Ansprüche 1-10, umfassend die Maßnahmen:
a) Anordnen des wenigstens einen Dichtelements (70) in einer Lagerbuchse (42) des wenigstens einen Lagerbereichs,
b) Einpressen wenigstens eines Lagerrings (64) der Lagereinheit (62) in die Lagerbuchse (42) derart, dass der wenigstens eine Lagerring (64) das wenigstens eine Dichtelement (70) axial beaufschlagt und das wenigstens eine Dichtelement (70) durch die axiale Beaufschlagung nach radial innen verformt wird.

12. Verfahren nach Anspruch 11, **dadurch gekennzeichnet, dass** die Maßnahmen a) und b) durchgeführt werden, nachdem die Schwenkwelle (18) mit einem ihrer Schwenkwellen-Endabschnitte in die Lagerbuchse des wenigstens einen Lagerbereichs eingreifend positioniert worden ist.

13. Verfahren nach Anspruch 11, **dadurch gekennzeichnet, dass** die Maßnahmen a) und b) durchgeführt werden, bevor die Schwenkwelle mit einem ihrer Schwenkwellen-Endabschnitte (48, 50) in die Lagerbuchse (42) des wenigstens einen Lagerbereichs eingreifend positioniert wird.

14. Brennstoffzellensystem, insbesondere für ein Fahrzeug, umfassend wenigstens eine Stellklappenbaugruppe (10) nach einem der Ansprüche 1-10, vorzugsweise hergestellt mit einem Verfahren nach einem der Ansprüche 11-13.
